# EUROPÄISCHE PATENTANMELDUNG

(11) **EP 4 525 234 A1**
(43) Veröffentlichungstag der Anmeldung: **19.03.2025**
(21) Anmeldenummer: 24199708.9
(22) Anmeldetag: 11.09.2024
(51) Int. Cl.: H02G 11/02, H01Q 1/24, H01Q 21/24, H01Q 21/28, B65H 75/44, H04B 7/0413

(54) **KABELTROMMEL FÜR EINEN MOBILEN MOBILFUNKMAST**

(30) Priorität: 15.09.2023 DE 102023125010
(71) Anmelder: Deutsche Telekom AG, 53113 Bonn (DE)
(72) Erfinder: KELLER, Stefan, 78662 Bösingen (DE)
(74) Vertreter: RDL Patentanwälte PartG mbB

(57) **Zusammenfassung**

Kabeltrommel für ein Koaxialkabel, die einen Hohlzylinder mit einer äußeren Mantelfläche zum Aufwickeln des Koaxialkabels umfasst, sowie mobiler Mobilfunkmast.

## Beschreibung

Die Erfindung betrifft eine Kabeltrommel für ein Koaxialkabel, die einen Hohlzylinder mit einer äußeren Mantelfläche zum Aufwickeln des Koaxialkabels umfasst. Ferner betrifft die Erfindung einen mobilen Mobilfunkmast.

Kabeltrommeln der eingangs genannten Art gehören in unterschiedlichen Ausgestaltungen zum Stand der Technik und dienen dazu, ein Handhaben einer flexiblen Leitung, beispielsweise eines elektrischen Kabels oder eines Schlauchs, zu vereinfachen. Bei einem Betätigen der Kabeltrommel rotiert der Hohlzylinder um eine Zylinderachse des Hohlzylinders. Dadurch wird die flexible Leitung abhängig von einer Drehrichtung des Hohlzylinders und einer Wickelrichtung der flexiblen Leitung wahlweise auf die äußere Mantelfläche des Hohlzylinders vollständig oder teilweise aufgewickelt oder von der äußeren Mantelfläche des Hohlzylinders vollständig oder teilweise abgewickelt.

Die Kabeltrommel erlaubt ein einfaches Anpassen einer Länge eines abgewickelten freien ersten Abschnitts der flexiblen Leitung an einen von der flexiblen Leitung zu überbrückenden Abstand, während ein nicht benötigter zweiter Abschnitt der flexiblen Leitung auf der Kabeltrommel aufgewickelt verbleibt. In einem zumindest teilweise aufgewickelten Zustand kann die flexible Leitung eine Mehrzahl von Windungen aufweisen, die insbesondere in mehreren Lagen übereinander angeordnet sind, d.h. einen zunehmenden radialen Abstand aufweisen.

Die flexible Leitung umfasst üblicherweise ein erstes Anschlussmittel, beispielsweise einen Stecker, eine Buchse oder eine Kupplung, das an einem freien ersten Ende der flexiblen Leitung fixiert ist, und ein zweites Anschlussmittel, das an einem dem ersten freien Ende gegenüberliegenden zweiten freien Ende der flexiblen Leitung und an dem Hohlzylinder fixiert ist. Die beiden Anschlussmittel dienen zum Verbinden der flexiblen Leitung jeweils mit einem komplementären Anschlussmittel einer weiteren flexiblen Leitung oder eines Geräts.

Zum Betätigen der Kabeltrommel muss allerdings zumindest ein komplementäres Anschlussmittel gelöst werden, was umständlich ist und Zeit kostet. Abgesehen davon kann ein wiederholtes Verbinden und Lösen der komplementären Anschlussmittel die ersten und zweiten Anschlussmittel allmählich beschädigen. Abgesehen davon kann es aus mechanischen Gründen sogar erforderlich sein, die ersten und zweiten Anschlussmittel von der flexiblen Leitung zu lösen, was beispielsweise mit einer aufwändigen und fehleranfälligen Schraubarbeit einhergehen kann.

Ohne ein Lösen des zumindest einen Anschlussmittels wird jedoch die flexible Leitung oder eine angeschlossene weitere flexible Leitung infolge des Rotierens des Hohlzylinders tordiert. Ein wiederholtes Tordieren kann die flexible Leitung oder die angeschlossene weitere flexible Leitung ebenfalls allmählich beschädigen.

Mobilfunkbetreiber verwenden mobile Mobilfunkmasten zum temporären Bereitstellen von Funkzellen. Ein Mobilfunkmast umfasst einen ausfahrbaren Mast, d.h. einen Mast mit einer einstellbaren variablen Länge, der beispielsweise als eine Teleskopstange ausgebildet ist, und eine an einem ersten freien Ende des Masts gehaltene Antenne. Ferner kann der mobile Mobilfunkmast ein Gehäuse mit einer in dem Gehäuse angeordneten Basisstation (Base Transceiver Station, BTS) umfassen, an dem der ausfahrbare Mast gehalten ist.

Ferner umfasst ein mobiler Mobilfunkmast ein Koaxialkabel, das die Antenne mit der Basisstation elektrisch leitend verbindet. Das Koaxialkabel muss korrespondierend zu der einstellbaren variablen Länge des Masts einen variablen Abstand der Antenne von dem Gehäuse überbrücken. Eine herkömmliche Kabeltrommel zum Handhaben des Koaxialkabels ist aus den oben genannten Gründen für den mobilen Mobilfunkmast nicht gut geeignet.

Es ist eine Aufgabe der Erfindung, eine Kabeltrommel für ein Koaxialkabel bereitzustellen, die ein einfaches und sicheres Handhaben eines Koaxialkabels eines mobilen Mobilfunkmasts ermöglicht. Eine weitere Aufgabe der Erfindung ist, einen mobilen Mobilfunkmast bereitzustellen.

Ein Gegenstand der Erfindung ist eine Kabeltrommel für ein Koaxialkabel, die einen Hohlzylinder mit einer äußeren Mantelfläche zum Aufwickeln des Koaxialkabels umfasst. Der Hohlzylinder ist zum Fixieren eines ersten freien Endes des Koaxialkabels ausgebildet und zum Aufwickeln bzw. Abwickeln des Koaxialkabels geeignet. An einem dem ersten freien Ende gegenüberliegenden zweiten freien Ende des Koaxialkabels kann ein Anschlussmittel, insbesondere ein Stecker, beispielsweise zum elektrischen Verbinden des Koaxialkabels mit einer Basisstation (Base Transceiver Station, BTS) eines mobilen Mobilfunkmasts fixiert sein.

Erfindungsgemäß umfasst die Kabeltrommel eine innerhalb des Hohlzylinders angeordnete drahtlose Übertragungsstrecke. Die drahtlose Übertragungsstrecke weist wie üblich eine erste Seite und eine von der ersten Seite separate zweite Seite auf.

Die erste Seite und die zweite Seite sind galvanisch voneinander entkoppelt. Die drahtlose Übertragungsstrecke ist ausgebildet, elektromagnetische Hochfrequenzsignale bidirektional zwischen der ersten Seite und der zweiten Seite zu übertragen. Das erste freie Ende des Koaxialkabels kann elektrisch leitend mit der ersten Seite der drahtlosen Übertragungsstrecke verbunden sein.

Ferner stellt die drahtlose Übertragungsstrecke eine mechanische Entkopplung des Koaxialkabels von der zweiten Seite der drahtlosen Übertragungsstrecke bereit. Auf diese Weise kann das an dem Hohlzylinder fixierte Koaxialkabel gegenüber der zweiten Seite der drahtlosen Übertragungsstrecke frei rotieren. Infolgedessen ist ein Handhaben des Koaxialkabels einfach. Ein Tordieren des Koaxialkabels wird vermieden, wodurch eine Lebensdauer des Koaxialkabels vergrößert und das Handhaben sicher gemacht wird.

Bevorzugt umfasst der Hohlzylinder ein elektromagnetisches Abschirmungsmaterial oder besteht der Hohlzylinder aus einem elektromagnetischen Abschirmungsmaterial. Das elektromagnetische Abschirmungsmaterial kann ein Metall umfassen und hindert von der drahtlosen Übertragungsstrecke emittierte elektromagnetische Hochfrequenzsignale an einem Austreten aus dem Hohlzylinder. Auf diese Weise ist die Kabeltrommel entstört.

Vorteilhaft umfasst die drahtlose Übertragungsstrecke eine erste Richtantenne und eine zweite Richtantenne, die zueinander weisend ausgerichtet und/oder zu einer Zylinderachse des Hohlzylinders kollinear angeordnet sind. Abstrahlcharakteristiken und Empfangscharakteristiken der ersten Richtantenne und der zweiten Richtantenne sind vorzugsweise identisch. Die Übertragungsstrecke kann eine im Mobilfunksektor gebräuchliche Übertragungstechnik implementieren.

Jede Richtantenne kann als eine kreuzpolarisierte MIMO-Antenne ausgebildet sein. Für kreuzpolarisierte Antennen ist die Bezeichnung XPOL, Cross-Polarized, gebräuchlich. XPOL MIMO Antennen ermöglichen eine bidirektionale Übertragung bei jedem relativen Drehwinkel der beiden Richtantennen um die Zylinderachse. Auf diese Weise wird bei einer kollinearen Anordnung ein Übertragen von elektromagnetischen Hochfrequenzsignalen unabhängig von dem relativen Drehwinkel, insbesondere auch während eines Aufwickelns oder Abwickelns des Koaxialkabels sichergestellt.

Idealerweise ist die erste Richtantenne drehfest an dem Hohlzylinder fixiert. Die erste Richtantenne rotiert bei dem Aufwickeln oder Abwickeln des Koaxialkabels synchron zu dem Koaxialkabel.

In einer günstigen Ausführungsform umfasst die Kabeltrommel ein Gestell, an dem der Hohlzylinder drehbar gelagert ist und an dem die zweite Richtantenne drehfest fixiert ist. Das Gestell ist ausgebildet, den Hohlzylinder zu tragen. Die zweite Richtantenne rotiert bei dem Aufwickeln oder Abwickeln des Koaxialkabels nicht.

Das Gestell kann als ein geschlossenes Gehäuse ausgebildet sein und einen Durchlass für das Koaxialkabel aufweisen. Auf diese Weise ist das Koaxialkabel optimal vor einer Beeinträchtigung geschützt, insbesondere vor einer witterungsbedingten Beeinträchtigung, wenn es in die Kabeltrommel eingerollt ist.

Alternativ oder zusätzlich kann die Kabeltrommel eine an dem Gestell fixierte und mit der zweiten Richtantenne elektrisch leitend verbundene Anschlussbuchse umfassen. Die Anschlussbuchse ermöglicht ein Anschließen eines weiteren Koaxialkabels. Alternativ kann ein weiteres Koaxialkabel unmittelbar mit der zweiten Richtantenne elektrisch leitend verbunden sein. Das weitere Koaxialkabel kann beispielsweise eine Basisstation mit der Kabeltrommel funktional verbinden.

In einer weiteren Ausführungsform umfasst die Kabeltrommel einen Flanschring, der an einem axialen Endbereich des Hohlzylinders angeordnet ist und radial von der äußeren Mantelfläche vorsteht. Der Flanschring erleichtert ein Aufwickeln des Koaxialkabels. Idealerweise umfasst die Kabeltrommel zwei an gegenüberliegenden axialen Endbereichen des Hohlzylinders angeordnete Flanschringe.

Die Kabeltrommel kann ferner eine Feder und/oder einen Elektromotor zum Drehen des Hohlzylinders aus einer Arbeitsposition des Hohlzylinders in eine Ruheposition des Hohlzylinders umfassen. In der Ruheposition des Hohlzylinders ist das Koaxialkabel so weit wie möglich in die Kabeltrommel eingerollt, d.h. auf den Hohlzylinder aufgewickelt. In der Arbeitsposition ist das Koaxialkabei so weit wie nötig aus der Kabeltrommel ausgerollt, d.h. von dem Hohlzylinder abgewickelt. Die Feder bzw. der Elektromotor bewirken als ein Antrieb der Kabeltrommel ein automatisches Einrollen des Koaxialkabels.

Vorteilhaft umfasst die Kabeltrommel ein mit der zweiten Richtantenne elektrisch leitend verbundenes und an dem Hohlzylinder fixiertes Koaxialkabel. Eine Funktionalität der Kabeltrommel wird durch das Koaxialkabel vervollständigt.

Noch ein Gegenstand der Erfindung ist ein mobiler Mobilfunkmast, der einen ausfahrbaren Mast, eine an einem freien Ende des ausfahrbaren Masts angeordnete Mobilfunkantenne und ein mit der Mobilfunkantenne elektrisch leitend verbundenes Koaxialkabel umfasst. Das Koaxialkabel kann für ein Anschließen der Antenne an eine Basisstation (Base Transceiver Station, BTS) verwendet werden.

Erfindungsgemäß umfasst der mobile Mobilfunkmast eine Kabeltrommel nach einer Ausführungsform der Erfindung zum wahlweisen automatischen Aufwickeln und Abwickeln des Koaxialkabels. Dank der Kabeltrommel kann der Mast des mobilen Mobilfunkmastes ausgefahren und eingefahren werden, ohne das Koaxialkabel von der Basisstation zu lösen und ohne das Koaxialkabel zu tordieren.

Ein wesentlicher Vorteil der erfindungsgemäßen Kabeltrommel besteht darin, dass sie ein Handhaben eines Koaxialkabels erleichtert und ein Tordieren des Koaxialkabels bei einem Aufwickeln oder Abwickeln verhindert, wodurch das Koaxialkabel vor einer Beschädigung infolge der Handhabung geschützt wird. Besonders vorteilhaft ist die Kabeltrommel für einen mobilen Mobilfunkmast mit einem ausfahrbaren Mast. Sie ermöglicht ein rasches und sicheres Betätigen des ausfahrbaren Masts, ohne ein Anschlussmittel des Koaxialkabels und/oder der Kabeltrommel zu lösen.

Es versteht sich, dass die vorstehend genannten und die nachstehend noch zu erläuternden Merkmale nicht nur in der jeweils angegebenen Kombination, sondem auch in anderen Kombinationen oder in Alleinstellung verwendbar sind, ohne den Rahmen der vorliegenden Erfindung zu verlassen.

Die Erfindung ist anhand eines Ausführungsbeispiels in den Zeichnungen schematisch dargestellt und wird im Folgenden unter Bezugnahme auf die Zeichnungen ausführlich beschrieben. Es zeigt
- Fig. 1: in einer geschnittenen Seitenansicht eine Kabeltrommel nach einer Ausführungsform der Erfindung für ein Koaxialkabel;
- Fig. 2: in einer Seitenansicht einen Mobilfunkmast nach einer Ausführungsform der Erfindung.

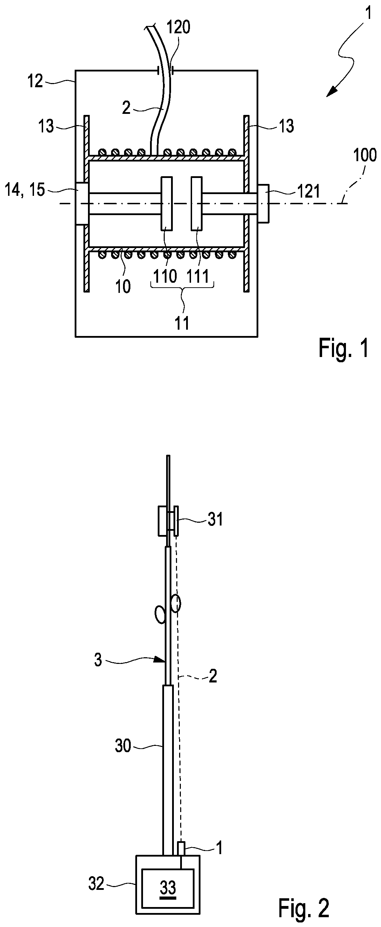

Fig. 1 zeigt in einer geschnittenen Seitenansicht eine Kabeltrommel 1 nach einer Ausführungsform der Erfindung für ein Koaxialkabel 2. Die Kabeltrommel umfasst einen Hohlzylinder 10 mit einer äußeren Mantelfläche zum Aufwickeln des Koaxialkabels 2. Der Hohlzylinder 10 kann ein elektromagnetisches Abschirmungsmaterial umfassen oder aus einem elektromagnetischen Abschirmungsmaterial bestehen. Zu der Kabeltrommel 1 kann ein Flanschring 13 gehören, der an einem axialen Endbereich des Hohlzylinders 10 angeordnet ist und radial von der äußeren Mantelfläche vorsteht. Idealerweise umfasst die Kabeltrommel 1 zwei an entgegengesetzten axialen Endbereichen angeordnete Flanschringe 13.

Die Kabeltrommel 1 umfasst ferner eine innerhalb des Hohlzylinders 10 angeordnete drahtlose Übertragungsstrecke 11. Die drahtlose Übertragungsstrecke 11 umfasst bevorzugt eine erste Richtantenne 110 und eine zweite Richtantenne 111, die zueinander weisend ausgerichtet sind. Insbesondere können die erste Richtantenne 110 und die zweite Richtantenne 111 zu einer Zylinderachse 100 des Hohlzylinders 10 kollinear angeordnet sein. Jede Richtantenne 110, 111 ist vorteilhaft als eine kreuzpolarisierte MIMO-Antenne ausgebildet.

Die erste Richtantenne 110 kann drehfest an dem Hohlzylinder 10 fixiert sein. Die Kabeltrommel 1 umfasst vorteilhaft ein Gestell 12, an dem der Hohlzylinder 10 drehbar gelagert ist und an dem die zweite Richtantenne 111 drehfest fixiert ist.

Das Gestell 12 kann als ein geschlossenes Gehäuse ausgebildet sein und einen Durchlass 120 für das Koaxialkabel 2 aufweisen. Das Gestell 12 kann ferner eine an dem Gestell 12 fixierte und mit der zweiten Richtantenne 111 elektrisch leitend verbundene Anschlussbuchse 121 umfassen.

Die Kabeltrommel 1 umfasst günstigerweise eine Feder 14 und/oder einen Elektromotor 15 zum Drehen des Hohlzylinders 10 aus einer Arbeitsposition des Hohlzylinders 10 in eine Ruheposition des Hohlzylinders 10.

Das Koaxialkabel 2 kann auch zu der Kabeltrommel 1 gehören und mit der zweiten Richtantenne 111 elektrisch leitend verbunden und an dem Hohlzylinder 10 fixiert sein.

Fig. 2 zeigt einen Mobilfunkmast 3 nach einer Ausführungsform der Erfindung. Der mobile Mobilfunkmast 3 umfasst einen ausfahrbaren Mast 30, eine an einem freien Ende des ausfahrbaren Masts 30 angeordnete Mobilfunkantenne 31, ein mit der Mobilfunkantenne 31 elektrisch leitend verbundenes Koaxialkabei 2 und die in Fig. 1 gezeigte Kabeltrommel 1 zum wahlweisen automatischen Aufwickeln und Abwickeln des Koaxialkabels 2. Ferner kann zu dem Mobilfunkmast 3 ein Gehäuse 32 und eine in dem Gehäuse angeordnete Basisstation 33 gehören. Das Koaxialkabel 2 verbindet die Mobilfunkantenne 31 elektrisch leitend mit der Basisstation 33.

### Bezugszeichenliste

- 1: Kabeltrommel
- 10: Hohlzylinder
- 100: Zylinderachse
- 11: drahtlose Übertragungsstrecke
- 110: erste Richtantenne
- 111: zweite Richtantenne
- 12: Gestell
- 120: Durchlass
- 121: Anschlussbuchse
- 13: Flanschring
- 14: Feder
- 15: Elektromotor
- 2: Koaxialkabel
- 3: Mobilfunkmast
- 30: Mast
- 31: Mobilfunkantenne
- 32: Gehäuse
- 33: Basisstation

## Patentansprüche

1. Kabeltrommel (1) für ein Koaxialkabel (2), umfassend einen Hohlzylinder (10) mit einer äußeren Mantelfläche zum Aufwickeln des Koaxialkabels (2) und eine innerhalb des Hohlzylinders (10) angeordnete drahtlose Übertragungsstrecke (11).

2. Kabeltrommel nach Anspruch 1, bei welcher der Hohlzylinder (10) ein elektromagnetisches Abschirmungsmaterial umfasst oder aus einem elektromagnetischen Abschirmungsmaterial besteht.

3. Kabeltrommel nach Anspruch 1 oder 2, bei dem die drahtlose Übertragungsstrecke (11) eine erste Richtantenne (110) und eine zweite Richtantenne (111) umfasst, die zueinander weisend ausgerichtet und/oder zu einer Zylinderachse (100) des Hohlzylinders (10) kollinear angeordnet sind.

4. Kabeltrommel nach Anspruch 3, bei der jede Richtantenne (110, 111) als eine kreuzpolarisierte MIMO-Antenne ausgebildet ist.

5. Kabeltrommel nach Anspruch 3 oder 4, bei der die erste Richtantenne (110) drehfest an dem Hohlzylinder (10) fixiert ist.

6. Kabeltrommel nach einem der Ansprüche 3 bis 5, umfassend ein Gestell (12), an dem der Hohlzylinder (10) drehbar gelagert ist und an dem die zweite Richtantenne (111) drehfest fixiert ist.

7. Kabeltrommel nach Anspruch 6, bei dem das Gestell (12) als ein geschlossenes Gehäuse ausgebildet ist und einen Durchlass (120) für das Koaxialkabel (2) aufweist und/oder eine an dem Gestell (12) fixierte und mit der zweiten Richtantenne (111) elektrisch leitend verbundene Anschlussbuchse (121) umfasst.

8. Kabeltrommel nach einem der Ansprüche 1 bis 7, umfassend einen Flanschring (13), der an einem axialen Endbereich des Hohlzylinders (10) angeordnet ist und radial von der äußeren Mantelfläche vorsteht, und/oder umfassend eine Feder (14) und/oder einen Elektromotor (15) zum Drehen des Hohlzylinders (10) aus einer Arbeitsposition des Hohlzylinders (10) in eine Ruheposition des Hohlzylinders (10).

9. Kabeltrommel nach einem der Ansprüche 1 bis 8, umfassend ein mit der zweiten Richtantenne (111) elektrisch leitend verbundenes und an dem Hohlzylinder (10) fixiertes Koaxialkabel (2).

10. Mobiler Mobilfunkmast (3), umfassend einen ausfahrbaren Mast (30), eine an einem freien Ende des ausfahrbaren Masts (30) angeordnete Mobilfunkantenne (31), ein mit der Mobilfunkantenne (31) elektrisch leitend verbundenes Koaxialkabel (2) und eine Kabeltrommel (1) nach einem der Ansprüche 1 bis 8 zum wahlweisen automatischen Aufwickeln und Abwickeln des Koaxialkabels (2).
